(19) Europäisches Patentamt
European Patent Office
Office européen des brevets

(11) **EP 2 358 238 B1**

(12) **FASCICULE DE BREVET EUROPEEN**

(45) Date de publication et mention
de la délivrance du brevet:
**06.05.2015 Bulletin 2015/19**

(51) Int Cl.:
***A47C 7/22*** *(2006.01)* ***B60N 2/72*** *(2006.01)*

(21) Numéro de dépôt: **09777514.2**

(22) Date de dépôt: **29.07.2009**

(86) Numéro de dépôt international:
**PCT/EP2009/005486**

(87) Numéro de publication internationale:
**WO 2010/069411 (24.06.2010 Gazette 2010/25)**

(54) **ELEMENT DE FOND D'ASSISE POUR SIEGE**

SITZPOLSTERBODENELEMENT FÜR EINEN SITZ

SITTING ELEMENT FOR A CHAIR

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **18.12.2008 FR 0807131**

(43) Date de publication de la demande:
**24.08.2011 Bulletin 2011/34**

(73) Titulaire: **Comatel Casuel
01350 Beon (FR)**

(72) Inventeurs:
• **GAGLIARDI, Christian
F-73170 Yenne (FR)**

• **BECHET, Michel
F-01420 Corbonod (FR)**

(74) Mandataire: **Dubreu, Sandrine et al
Cabinet Hecké
10, rue d'Arménie
Europole
BP 1537
38025 Grenoble Cedex 1 (FR)**

(56) Documents cités:
**EP-A- 0 867 332 WO-A-2007/108862
US-A- 5 009 827 US-A1- 2003 001 424
US-A1- 2003 160 494**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique de l'invention

L'invention concerne un élément de fond d'assise, pour un siège, comportant une nappe de suspension formée d'un premier élastomère thermoplastique orienté au moins dans une direction de sorte que le module d'élasticité soit plus important dans ladite direction que dans les autres directions et des moyens d'attache de ladite nappe de suspension à une armature dudit siège.

L'invention concerne également un siège comportant un tel élément de fond d'assise.

### État de la technique

Les sièges notamment les sièges de véhicule sont constitués généralement d'une armature supportant une assise et un dossier. Afin d'améliorer le confort du passager, l'assise est généralement rembourrée d'une mousse en polyuréthane qui amortit les chocs et les vibrations du véhicule. Néanmoins, les sièges ainsi réalisés sont lourds et épais ce qui limite leur utilisation notamment comme siège rabattable ou pliant. De plus, en cas d'impact important, les mousses se compriment et provoquent l'affaissement du corps du passager qui n'est plus dans une bonne position pour que la ceinture de sécurité puisse jouer son rôle efficacement. Pour améliorer le confort et la sécurité, des éléments de fond d'assise tissés, disposés entre l'armature et l'assise ont été développés diminuant ainsi l'épaisseur des sièges tout en conservant leur confort et le maintien du corps du passager. L'élément de fond d'assise compense, par une déformation statique, l'effort exercé sur le siège par l'utilisateur et, absorbe par déformation dynamique, les chocs et les vibrations retransmis au siège par les suspensions du véhicule.

Le document US-A-2003/160494 décrit notamment un siège comportant un fond d'assise moulé directement sur un support d'assise. Le support d'assise peut être formé d'un matériau tissé ou non tissé.

Plus récemment, un élément de fond d'assise en élastomère thermoplastique orienté a été développé. L'élastomère thermoplastique orienté a un module d'élasticité dans une direction donnée plus grand que dans les autres directions. Ainsi, les propriétés de soutien statique et dynamique du siège sont améliorées. L'élément de fond d'assise s'adapte par allongement, généralement dans le sens transversal à l'assise du siège, à la morphologie du passager pour une assise confortable. En revanche, le module d'élasticité étant plus élevé dans la direction d'orientation de l'élastomère, l'élément de fond d'assise est plus rigide lorsqu'il est sollicité dans cette direction par rapport aux autres directions notamment dans le sens vertical. Le corps est, par conséquent, maintenu en position par l'élément de fond d'assise lors d'impacts verticaux provenant notamment des irrégularités de la route qui prévient l'affaissement de l'assise.

Le document US-A-2007/221814 décrit un fond d'assise comportant un support en élastomère et des moyens d'attaches en matériau thermoplastique moulé, par exemple en polyéther ester block ou un uréthane. Les moyens d'attaches comportent une partie qui encapsule le support et un organe d'accrochage relié à un cadre. La durabilité de l'ensemble est augmentée par la présence de connecteurs élastiques en matériau orienté qui assurent l'élasticité.

Le document US-A-5775779 décrit la réalisation d'un élément de fond d'assise, représenté à la figure 1, à partir de différents élastomères thermoplastiques biaxiallement orientés selon l'axe XX et YY. L'élément de fond d'assise comporte, plus particulièrement, une membrane élastomère 1 en polyuréthane orienté et un moyen d'accrochage 2 de la membrane 1 sur l'armature (non représentée). Un film en polyuréthane est extrudé et orienté puis coupé pour former la membrane élastomère 1. Pour réaliser le moyen d'accrochage 2, une tige métallique 3 comportant des crochets 4 est disposé dans un espace aménagé par un repli formé par les bords de la membrane 1. Les crochets 4 sont passés au travers d'ouvertures 5 formées au niveau des bords de la membrane 1. Puis, la membrane 1 est scellée à chaud de façon à immobiliser la tige dans l'espace 5. Les crochets 4 permettent d'arrimer l'élément de fond d'assise à l'armature, dans le sens transversal de l'assise ou au dossier d'un siège (non représenté). Néanmoins, à l'usage, l'effort exercé sur la membrane 1 entraîne une détérioration par déchirure, plus particulièrement, au niveau de la soudure qui constitue un point de faiblesse de l'élément de fond d'assise et une amorce de rupture.

### Objet de l'invention

L'invention a pour but de proposer un nouvel élément de fond d'assise, pour un siège, présentant des qualités de maintien et de confort améliorées remédiant aux inconvénients de l'art antérieur.

En particulier, l'invention a pour but de proposer un élément de fond d'assise performant, peu épais et léger, résistant à l'usage, pouvant être fabriqué selon un procédé facile à mettre en oeuvre et peu coûteux.

Selon l'invention, ce but est atteint par un élément de fond d'assise et un siège comportant un tel fond d'assise selon les revendications indexées.

Plus particulièrement, ce but est atteint par le fait que les moyens d'attache comportent une pièce surmoulée sur au moins une partie du pourtour de la nappe de suspension et munie d'au moins un organe d'accrochage à l'armature du siège et par le fait que lesdits moyens d'attache sont formés d'un second élastomère thermoplastique de la même famille que le premier élastomère thermoplastique et choisi de manière à créer, au surmoulage, des liaisons chimiques avec ledit premier élastomère thermoplastique de la nappe de suspension, la pièce surmoulée et l'organe d'accrochage sont solidaires, non articulés entre eux, moulés en une seule pièce et formés intégralement dans le prolongement de la nappe de suspension.

## Description sommaire des dessins

D'autres avantages et caractéristiques ressortiront plus clairement de la description qui va suivre des modes particuliers de réalisation de l'invention donnés à titre d'exemples non limitatifs et représentés aux dessins annexés, dans lesquels :

- La figure 1 représente, schématiquement et en perspective, un élément de fond d'assise de l'art antérieur.
- La figure 2 représente, schématiquement et en perspective, un élément de fond d'assise sur une partie d'armature d'un siège selon un mode particulier de l'invention.
- La figure 3 représente, schématiquement, une vue partielle agrandie de la figure 2.
- La figure 4 représente, schématiquement, une coupe selon l'axe VV de la figure 3.
- La figure 5 représente, schématiquement et en coupe, une vue partielle d'un élément de fond d'assise sur une partie d'armature de siège selon une variante.
- La figure 6 représente une courbe d'essai de traction jusqu'à rupture, d'un élément de fond d'assise selon un mode de réalisation particulier de l'invention.
- La figure 7 représente une courbe d'essai de traction jusqu'à rupture, d'un élément de fond d'assise selon un autre mode de réalisation particulier de l'invention.

## Description des modes de réalisation particuliers de l'invention

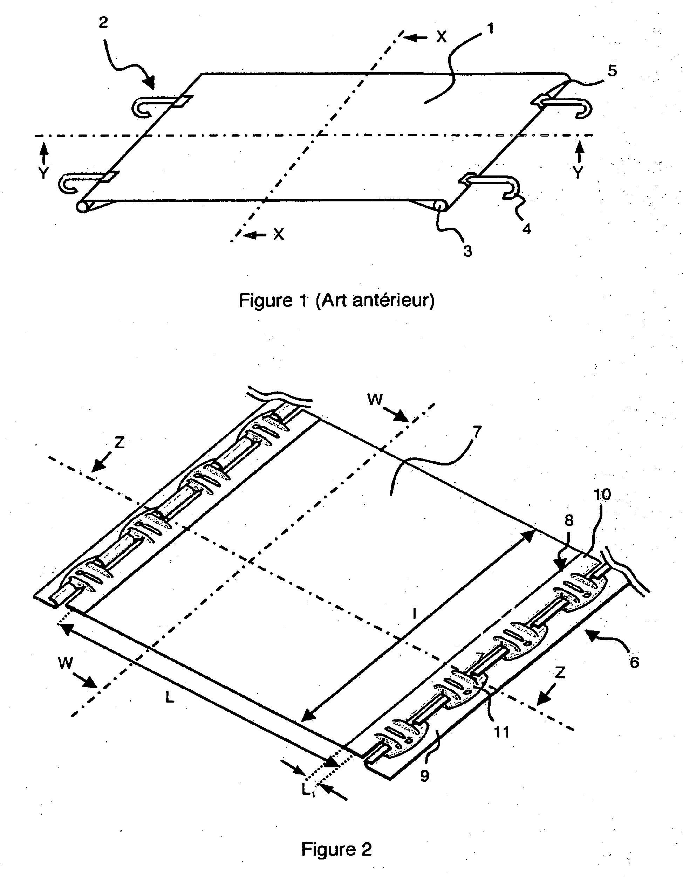

Selon un mode de réalisation particulier, un siège notamment un siège pour véhicule possède une armature 6 supportant une assise et un dossier. Un élément de fond d'assise, représenté à la figure 2, est positionné entre l'armature 6 et l'assise et/ou le dossier du siège (non représenté(s)) afin d'améliorer le confort de l'utilisateur et amortir les chocs provenant des imperfections de la route. Cet élément de fond d'assise comporte une nappe de suspension 7 formée d'un premier élastomère thermoplastique.

Plus particulièrement, le premier élastomère thermoplastique est orienté au moins dans une direction, par exemple, comme illustré à la figure 2, selon l'axe ZZ de sorte que le module d'élasticité ou module de Young et la résistance à la rupture soient plus importants dans l'axe ZZ que dans les autres directions, étant entendu que la nappe de suspension 7 est d'autant plus rigide que le module de Young est élevé. L'orientation du premier élastomère thermoplastique est accomplie par un procédé connu qui consiste à chauffer puis extruder le premier élastomère thermoplastique pour former la nappe de suspension 7. Cette dernière est ensuite étirée dans le sens de l'extrusion puis chauffer pour réticuler le premier élastomère thermoplastique. Il est alors déformé de façon permanente et présente des propriétés mécaniques renforcées lorsqu'il est sollicité dans l'axe ZZ c'est-à-dire dans le sens de l'orientation des chaînes polymères du premier élastomère thermoplastique par rapport aux autres directions. Ainsi, lorsque l'utilisateur s'assied sur le siège, il exerce une contrainte peu élevée sur l'élément de fond d'assise qui est compensée par une déformation élastique de la nappe de suspension 7. Cette déformation élastique confère un sentiment de confort à l'utilisateur. En revanche, pour des chocs c'est-à-dire lorsque des contraintes plus élevées sont exercées sur l'élément de fond d'assise, la nappe de suspension 7 est plus rigide dans l'axe ZZ par rapport aux autres directions assurant ainsi le maintien du corps de l'utilisateur.

Le premier élastomère thermoplastique est, avantageusement, un polyamide, de préférence, aliphatique qui peut être orienté par des techniques conventionnelles d'extrusion. Les polyamides allient une bonne tenue, thermique et chimique, et de bonnes propriétés mécaniques, notamment élastiques. Plus particulièrement, la nappe de suspension 7 est un polyéther bloc amide ("thermoplastic polyether amide" TPEA) obtenu à partir de copolymères blocs polyamide et blocs polyéther, les blocs polyamide et les blocs polyéther étant reliés par une fonction ester. Le TPEA est apte à former une nappe de suspension 7 orientée grâce à l'alternance de blocs flexibles d'éther aliphatique et de blocs rigides d'amide.

L'épaisseur de la nappe de suspension 7 est, avantageusement, choisie entre 300 $\mu$m et 600 $\mu$m et le poids entre 35 g et 75 g.

L'élément de fond d'assise est arrimé sur l'armature 6 du siège par l'intermédiaire de moyens d'attache 8 sur au moins une partie du pourtour de la nappe de suspension 7. Pour arrimer l'élément de fond d'assise sur l'armature 6 du siège, une traction est appliquée à l'élément de fond d'assise par l'intermédiaire des moyens d'attache 8. La nappe de suspension 7 est alors prétendue réalisant ainsi un soutien initial de l'assise et/ou du dossier du siège. En position sur l'armature 6, la nappe de suspension 7 est prétendue selon un allongement typique compris entre 3% et 8%.

Selon un mode particulier de l'invention représenté à la figure 2, la nappe de suspension 7 a, par exemple, une forme rectangulaire, de longueur L et de largeur l, correspondant à une forme classique d'assise de siège. La nappe de suspension 7 est dotée de moyens d'attache 8 disposés de part et d'autre de deux côtés opposés de la nappe de suspension 7.

L'armature 6 peut comporter deux profilés 9 servant de support à la nappe de suspension 7. Le profilé 9 a une forme de lame recourbée sur un de ses bords longitudinaux. Les bords recourbés des profilés 9 sont orientés vers l'intérieur de l'assise et en vis-à-vis.

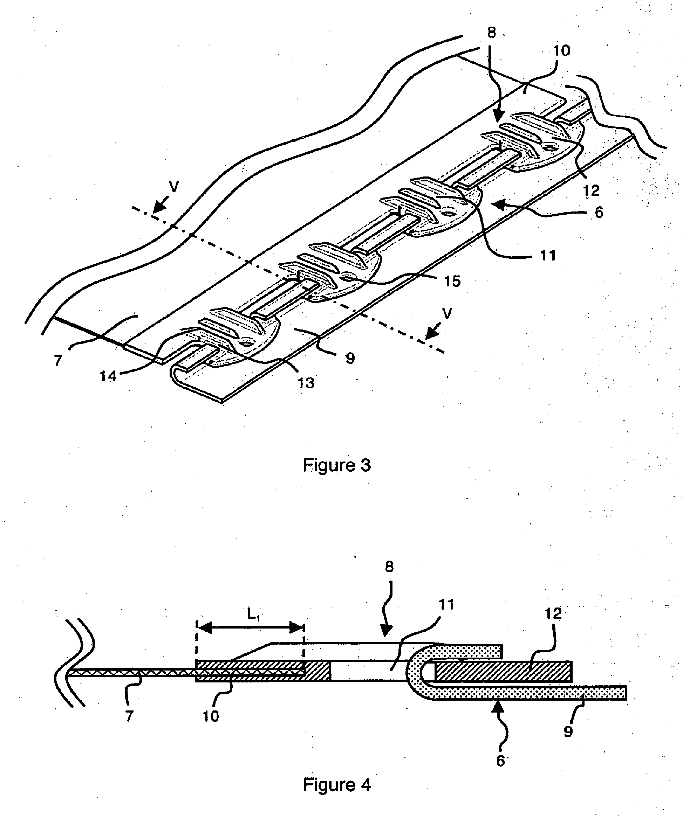

Comme représenté aux figures 3 et 4, les moyens d'attache 8 comportent une pièce surmoulée 10 sur au moins une partie du pourtour de la nappe de suspension 7 et munie d'au moins un organe d'accrochage 11 à l'armature 6 du siège. La pièce surmoulée 10 et l'organe d'accrochage 11 sont solidaires, non articulés entre eux, moulés par injection en une seule pièce et formés intégralement dans le prolongement de la nappe de suspension 7. Les moyens d'attache 8 prennent en sandwich la nappe de suspension 7 sur la pièce surmoulée 10. Cette pièce surmoulée 10 doit assurer la prise sur la nappe de suspension 7 et renforcer la nappe de suspension 7. Les moyens d'attache 8 n'affaiblissent pas localement la nappe de suspension 7 puisque que l'effort résultant de la contrainte exercée sur la nappe de suspension 7, est réparti sur l'ensemble de la pièce surmoulée 10. L'efficacité de l'élément de fond d'assise dépend notamment de la qualité de la liaison entre la nappe de suspension 7 et les profilés 9 de l'armature 6. En effet, les moyens d'attache 8 garantissent la reprise de l'effort appliqué à la nappe de suspension 7 sur l'armature 6 du siège.

La pièce surmoulée 10 couvre la nappe de suspension 7 sur une distance $L_1$ dans le sens de la longueur L de la nappe de suspension 7 (figure 4). La pièce surmoulée 10 est, avantageusement, uniforme en épaisseur et en dimension sur toute la partie recouverte du pourtour de la nappe de suspension 7 formant ainsi une bande de recouvrement (figure 2). La distance $L_1$ est comprise, de préférence, entre 15 et 20 mm.

Selon une variante non représentée, la nappe de suspension 7 est circulaire et les profilés 9 curvilignes.

Le rapport entre la surface de recouvrement de la nappe de suspension 7 par la pièce surmoulée 10 et la surface totale de la nappe de suspension 7 est choisi de sorte que la pièce surmoulée 10 assure une prise suffisante et que la nappe de suspension 7 exerce sa fonction d'amortissement de chocs et de soutien du corps de l'utilisateur de façon optimisée.

Les moyens d'attache 8 sont formés d'un second élastomère thermoplastique de la même famille que le premier élastomère et choisi de manière à créer, au surmoulage, des liaisons chimiques avec le premier élastomère thermoplastique de la nappe de suspension 7. Les propriétés mécaniques des premier et second élastomère thermoplastique sont suffisamment proches pour que leurs comportements vis-à-vis de sollicitations mécaniques soient similaires. Le second élastomère thermoplastique est, avantageusement, un polyamide, de préférence, un polyamide aliphatique. Par exemple, le second élastomère thermoplastique est un polycaprolactame noté PA6. L'utilisation d'élastomères de la même famille pour le premier et le second élastomère thermoplastique permet de créer, au surmoulage, des liaisons chimiques entre les moyens d'attache 8 et la nappe de suspension 7. Ces liaisons chimiques renforcent la cohésion de l'ensemble. La liaison chimique peut être une liaison de type Van der Waals et/ou covalente. Par même famille, on entend un élastomère ayant des caractéristiques physiques, chimiques et mécaniques similaires, par exemple, la famille des polyamides. L'effet d'amorce de rupture, observable dans le cas des moyens d'attache de l'art antérieur, est alors fortement diminué.

Les moyens d'attache 8 sont, avantageusement, moulés par injection en une seule pièce selon tout procédé connu.

Selon un mode de réalisation particulier, le second élastomère thermoplastique comporte une charge de renfort, de préférence, de la fibre de verre. Les fibres de verre renforcent le second élastomère thermoplastique pour rendre les moyens d'attaché 8 plus rigides. Pour obtenir un bon compromis entre une faible épaisseur, une bonne adhérence avec la nappe de suspension 7 et une rigidité suffisante pour assurer la reprise de l'effort exercé sur la nappe de suspension 7, le second élastomère thermoplastique peut, avantageusement, comporter entre 5% et 20% en poids, de préférence de 15% en poids de charge de renfort. Cette charge de renfort est, avantageusement, de la fibre de verre. Les fibres de verre étant peu compatibles chimiquement et mécaniquement avec le premier élastomère thermoplastique, les moyens d'attache 8 adhèrent moins bien avec la nappe de suspension 7 lorsque la charge de fibre de verre est trop importante. De plus, une augmentation de la charge en fibres de verre du second élastomère thermoplastique engendre une augmentation de l'épaisseur des moyens d'attache 8. Une épaisseur trop élevée peut constituer un désavantage notamment pour la fabrication de siège pliable. A contrario, lorsque la charge en fibres de verre est trop faible, la rigidité du second élastomère thermoplastique n'est pas suffisante pour obtenir une reprise de l'effort optimisée.

Les fibres de verre peuvent être incorporées dans le second élastomère thermoplastique à l'état fondu mais on trouve également dans le commerce un certain nombre d'élastomère thermoplastique déjà chargé.

Selon un mode de réalisation particulier, l'organe d'accrochage 11 peut comporter plusieurs ergots 12 venant s'emboîter dans les profilés 9 de l'armature 6 grâce à des ouvertures 13 aménagées sur le bord recourbé des profilés 9 (figure 3). Les ergots 13 sont répartis le long de l'organe d'accrochage 11 de façon à distribuer l'effort sur les profilés 9 de façon homogène et d'assurer ainsi un maintien optimisé du corps de l'utilisateur.

Des nervures 14 peuvent, avantageusement, être réalisées pour structurer les moyens d'attache 8. Ces nervures 14 peuvent être concentrées au niveau de l'organe d'accrochage 11. De même, des orifices 15 peuvent être réalisées à l'extrémité libre de l'organe d'accrochage 11 c'est-à-dire à l'opposé de la pièce surmoulée 10. Ces orifices 15 constituent alors des points de préhension utiles dans le procédé d'assemblage du siège notamment pour leur montage automatique et la mise en tension de l'élément de fond d'assise.

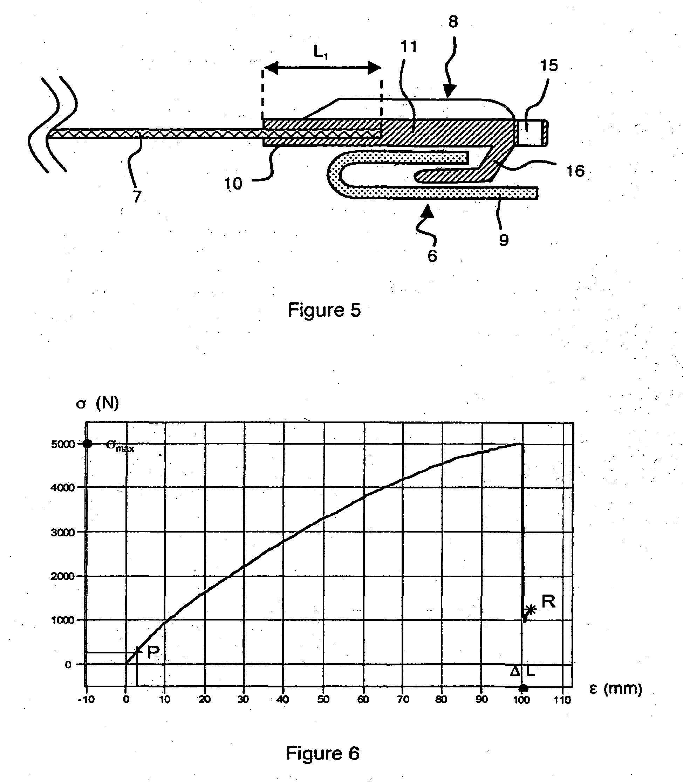

Selon une variante représentée à la figure 5, l'organe d'accrochage 11 comporte des crochets 16 répartis le long de la face inférieure de l'organe d'accrochage 11 (en bas de la figure 5). Les crochets 16 permettent d'arrimer les moyens d'attache 8 sur le bord recourbé du profil 9 de l'armature 6.

Pour obtenir un bon compromis entre les propriétés mécaniques et les contraintes de poids et d'épaisseur des sièges, l'épaisseur de l'élément de fond d'assise est, avantageusement, choisie entre 350 $\mu$m et 650 $\mu$m et le poids entre 100 g et 200 g.

Exemple 1:

À titre d'exemple, une nappe de suspension 7 rectangulaire de longueur L=360 m, de largeur l=320 mm et d'épaisseur h=400 $\mu$m est réalisée à partir d'un élastomère polyéther bloc amide commercialisé sous le nom PEBAX® 5533 par la société Arkéma et mono-orienté dans le sens de la longueur avec un rapport d'étirage de 4 selon un procédé connu. Un polycaprolactame PA6, chargé avec 15% en poids de fibres de verre, commercialisé sous le nom Schulamid® 6 GF15 par la société A. Schulman, est ensuite surmoulé à 280°C sur la nappe de suspension 7 grâce à un moule ayant une forme complémentaire à celui des moyens d'attache 8 afin d'obtenir une pièce surmoulée 10 et un organe d'accrochage 11 en une seule pièce. La pièce surmoulée 10 couvre les bords de deux des côtés de la nappe de suspension 7. Les deux côtés sont opposés et perpendiculaires à la longueur c'est-à-dire au sens de l'orientation des chaînes polymères de la nappe de suspension 7. Le surmoulage est réalisé sur une distance $L_1$ de 19 mm. Les fibres de verre ont des épaisseurs de quelques microns de diamètre et des longueurs d'environ 30 $\mu$m en moyenne.

L'élément de fond d'assise ainsi réalisé est testé en traction en appliquant une contrainte dans le sens de l'orientation des chaînes polymères c'est-à-dire dans le sens de la longueur et en mesurant la déformation c'est-à-dire l'allongement correspondant selon une technique d'essai en traction conventionnelle. La vitesse de déformation est de 100mm par minute. La courbe contrainte ($\sigma$)/allongement ($\varepsilon$), réprésentée à la figure 6, montre une charge de rupture $\sigma_{max}$, correspondant à la contrainte maximale de 5000 N. La pente initiale P, pour une contrainte comprise entre 0 et 300 N, est importante puis diminué pour des contraintes supérieures à 300 N. La courbe traduit un comportement ductile avec une déformation régulière jusqu'au point de rupture R. La contrainte chute rapidement à partir de 100 mm d'allongement. Le pourcentage d'allongement A% est calculé selon la formule suivante:

$$A\% = (\Delta L / L_0) * 100$$

Avec L étant la longueur ultime juste avant la rupture $L_0$ étant la longueur initiale avant le début de l'essai de traction.

$$\Delta L = L - L_0$$

Le pourcentage d'allongement A% est de 28%. Le résultat obtenu est du même ordre de grandeur que pour un élément de fond d'assise textile conventionnel dont le A% se situe généralement entre 20 et 40%. Par ailleurs, la charge de rupture maximale $\sigma_{max}$ est bien supérieure à in charge imposée, par exemple, pour un test d'enfoncement sous charge de siège de véhicule. Ces tests drastiques sont imposés par les normes sécuritaires dans le domaine de l'automobile.

Exemple 2 :

Un test en traction a été réalisé également sur un élément de fond d'assise rectangulaire, de longueur L=100 mm, de largeur l=100 mm et d'épaisseur h=400 $\mu$m. L'élément de fond d'assise est obtenu de façon identique à l'élément de l'exemple 1. Néanmoins, la nappe de suspension 7 est mono-orientée dans le sens transversal. Les deux moyens d'attache 8 sont donc parallèles à l'orientation des chaînes polymères de la nappe de suspension 7. La traction est exercée perpendiculairement à l'orientation des chaînes polymères de la nappe de suspension 7.

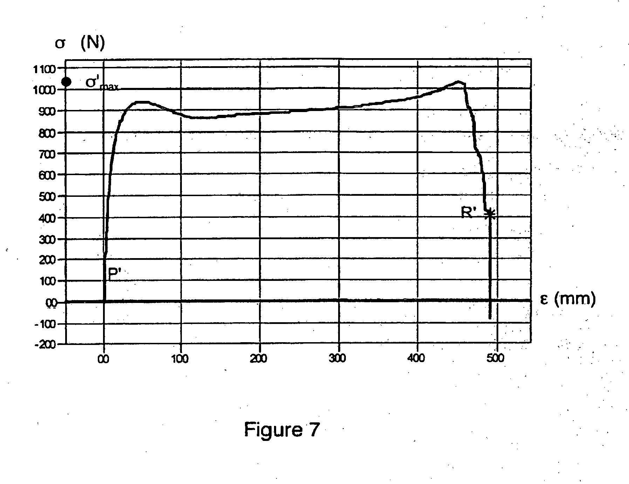

La courbe contrainte ($\sigma$)/allongement ($\varepsilon$), réprésentée à la figure 7, montre une forte pente initiale P' plus importante que P puis un plateau à 900 N. La rupture R' a lieu à environ 480 mm d'allongement et la charge de rupture maximale $\sigma_{max}$ est d'environ 1500 N. Le pourcentage d'allongement A% est de 390%, valeur bien plus élevée que dans l'exemple 1.

Les sièges comportant l'élément de fond d'assise décrit ci-dessus assure un maintien confortable du corps de l'utilisateur tout en amortissant efficacement le corps de l'utilisateur en cas de choc. Ses sièges ont également une assise suffisamment peu épaisse pour pouvoir envisager de l'utiliser pour des sièges pliants. Les moyens d'attache 8 de l'élément de fond d'assise assurent une reprise de l'effort efficace sur l'armature du siège et diminuent l'effet d'amorce de rupture permettant notamment d'éviter la déchirure de la nappe de suspension 7 et la détérioration de ses qualités élastiques. Le procédé de fabrication de l'élément de fond d'assise d'un tel siège met également en oeuvre des techniques conventionnelles de moulage, d'injection et d'extrusion de thermoplastiques qui peuvent facilement s'intégrer dans une chaîne de fabrication industrielle.

**Revendications**

1. Elément de fond d'assise, pour un siège, comportant une nappe de suspension (7) formée d'un premier élastomère thermoplastique et des moyens d'attache (8) de ladite nappe de suspension (7) à une armature (6) dudit siège, les moyens d'attache (8) comportent une pièce surmoulée (10) sur au moins une partie du pourtour de la nappe de suspension (7) et munie d'au moins un organe d'accrochage (11) à l'armature (6) du siège et lesdits moyens d'attache (8) sont formés d'un second élastomère thermoplastique de la même famille que le premier élastomère thermoplastique et choisi de manière à créer, au surmoulage, des liaisons chimiques avec ledit premier élastomère thermoplastique de la nappe de suspension (7), **caractérisé en ce que** ledit premier élastomère thermoplastique est orienté au moins dans une direction de sorte que le module d'élasticité soit plus important dans ladite direction que dans les autres directions, et **en ce que** la pièce surmoulée (10) et l'organe d'accrochage (11) sont solidaires, non articulés entre eux, moulés en une seule pièce et formés intégralement dans le prolongement de la nappe de suspension (7).

2. Elément selon la revendication 1, **caractérisé en ce que** la pièce surmoulée 10 couvre la nappe de suspension 7 sur une distance $L_1$ dans le sens de la longueur L de la nappe de suspension 7, ladite distance $L_1$ étant comprise, de préférence, entre 15 et 20 mm et **en ce que** ladite pièce surmoulée 10 est uniforme en épaisseur et en dimension sur toute la partie recouverte du pourtour de la nappe de suspension 7.

3. Elément selon l'une quelconque des revendications 1 à 2, **caractérisé en ce que** les premier et second élastomères thermoplastiques sont des polyamides.

4. Elément selon l'une quelconque des revendications 1 à 3, **caractérisé en ce que** le premier élastomère thermoplastique est un polyéther bloc amide.

5. Elément selon l'une quelconque des revendications 1 à 4, **caractérisé en ce que** le second élastomère thermoplastique est un polyamide aliphatique.

6. Elément selon la revendication 5, **caractérisé en ce que** le second élastomère thermoplastique est un polycaprolactame.

7. Elément selon l'une quelconque des revendications 1 et 6, **caractérisé en ce que** le second élastomère thermoplastique comporte entre 5% et 20% en poids d'une charge de renfort, de préférence 15% en poids.

8. Elément selon la revendication 7, **caractérisé en ce que** la charge de renfort est de la fibre de verre.

9. Siège comportant un élément de fond d'assise selon l'une quelconque des revendications 1 à 8.

**Patentansprüche**

1. Sitzbodenelement für einen Sitz mit einer Federungsauflage (7), die von einem ersten thermoplastischen Elastomer gebildet ist, und Mittel zur Befestigung (8) der Federungsauflage (7) an einem Gestell (6) des genannten Sitzes, wobei die Befestigungsmittel (8) ein Element (10) umfassen, das zumindest an einen Teil des Umfangs der Federungsauflage (7) angeformt und mit mindestens einem Element (11) zur Befestigung am Gestell (6) des Sitzes versehen ist, und wobei die genannten Befestigungsmittel (8) von einem zweiten thermoplastischen Elastomer der gleichen Familie wie das erste thermoplastische Elastomer gebildet sind, das so gewählt ist, dass es beim Anformen chemische Reaktionen mit dem ersten thermoplastischen Elastomer der Federungsauflage (7) erzeugt, **dadurch gekennzeichnet, dass** das genannte erste thermoplastische Elastomer mindestens in einer Richtung ausgerichtet ist, sodass das Elastizitätsmodul in der genannten Richtung höher als in den anderen Richtungen ist, sowie dadurch, dass das angeformte Element (10) und das Befestigungselement (11) nicht aneinander angelenkt fest miteinander verbunden, aus einem einzigen Stück geformt und vollständig in der Verlängerung der Federungsauflage (7) gebildet sind.

2. Element nach Anspruch 1, **dadurch gekennzeichnet, dass** das angeformte Element (10) die Federungsauflage (7) über eine Distanz $L_1$ in Längenrichtung L der Federungsauflage (7) bedeckt, wobei die genannte Distanz $L_1$ vorzugsweise 15 bis 20 mm beträgt und dadurch, dass das angeformte Element (10) eine gleichmäßige Dicke und gleiche Abmessungen auf dem ganzen vom Umfang der Federungsauflage (7) bedeckten Abschnitt hat.

3. Element nach einem der Ansprüche 1 bis 2, **dadurch gekennzeichnet, dass** erstes und zweites thermoplastisches Elastomer Polyamide sind.

4. Element nach einem der Ansprüche 1 bis 3, **dadurch gekennzeichnet, dass** das erste thermoplastische Elastomer ein Polyether-Block-Amid ist.

5. Element nach einem der Ansprüche 1 bis 4, **dadurch gekennzeichnet, dass** das zweite thermoplastische Elastomer ein aliphatisches Polyamid ist.

6. Element nach Anspruch 5, **dadurch gekennzeichnet, dass** das zweite thermoplastische Elastomer ein Polycaprolactam ist.

7. Element nach einem der Ansprüche 1 und 6, **dadurch gekennzeichnet, dass** das zweite thermoplastische Elastomer 5 bis 20, vorzugsweise 15 Gew.-% eines Füllstoffs umfasst.

8. Element nach Anspruch 7, **dadurch gekennzeichnet, dass** der Füllstoff Glasfaser ist.

9. Sitz, der ein Sitzbodenelement nach einem der Ansprüche 1 bis 8 umfasst.

**Claims**

1. Seat cushion bottom element, for a seat, comprising a suspension layer (7) formed of a first thermoplastic elastomer and attachment means (8) for attaching the suspension layer (7) to a frame (6) of the seat, the attachment means (8) comprising an overmoulded piece (10) on at least part of the perimeter of the suspension layer (7), said overmoulded piece being provided with at least one coupling member (11) for coupling to the frame (6) of the seat, and the attachment means (8) being formed of a second thermoplastic elastomer from the same family as the first thermoplastic elastomer and selected so as to create, on the overmoulding, chemical bonds with said first thermoplastic elastomer of the suspension layer (7), **characterized in that** said first thermoplastic elastomer is oriented at least in one direction so that the elastic modulus is higher in said direction than in the other directions, and **in that** the overmoulded piece (10) and the coupling member (11) are integral, not articulated to each other, moulded in one piece and integrally formed as an extension of the suspension layer (7).

2. Element as claimed in claim 1, **characterized in that** the overmoulded piece (10) covers the suspension layer (7) on a distance $L_1$ in the direction of length L of the suspension layer (7), said distance $L_1$ being comprised preferably within 15 and 20 mm and **in that** said overmoulded piece (10) has uniform thickness and dimensions on the whole covered part of the perimeter of the suspension layer (7).

3. Element as claimed in one of claims 1 to 2, **characterized in that** the first and second thermoplastic elastomers are polyamides.

4. Element as claimed in one of claims 1 to 3, **characterized in that** the first thermoplastic elastomer is a polyether block amide.

5. Element as claimed in one of claims 1 to 4, **characterized in that** the second thermoplastic elastomer is an aliphatic polyamide.

6. Element as claimed in claim 5, **characterized in that** the second thermoplastic elastomer is a polycaprolactam.

7. Element as claimed in one of claims 1 to 6, **characterized in that** the second thermoplastic elastomer comprises between 5 and 20% percent by weight of a reinforcing filler, preferably 15% percent by weight.

8. Element as claimed in claim 7, **characterized in that** the reinforcing filler is fiberglass.

9. Seat comprising a seat cushion bottom element as claimed in one of claims 1 to 8.

Figure 1 (Art antérieur)

Figure 2

Figure 3

Figure 4

Figure 5

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003160494 A
- US 2007221814 A
- US 5775779 A